Europäisches Patentamt

European Patent Office

Office européen des brevets

(19)

(11) Veröffentlichungsnummer: **0 355 667**

**A1**

(12) **EUROPÄISCHE PATENTANMELDUNG**

(21) Anmeldenummer: **89115041.9**

(22) Anmeldetag: **16.08.89**

(51) Int. Cl.4 **C02F 1/52 , C02F 1/62 , C02F 1/24**

(30) Priorität: **17.08.88 DE 3827831**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **THYSSEN INDUSTRIE AG**
**Am Thyssenhaus 1**
**D-4300 Essen 1(DE)**

(72) Erfinder: **Weber, Günter**
**Bottenbruch 27**
**D-4330 Müllheim a.d. Ruhr(DE)**
Erfinder: **Weber, Michael**
**Friedrichstrasse 4**
**D-4330 Müllheim a.d. Ruhr(DE)**

(74) Vertreter: **Eberhard, Friedrich, Dr. et al**
**Am Thyssenhaus 1**
**D-4300 Essen 1(DE)**

(54) **Verfahren und Anlage zur Aufbereitung von Abwasser, insbesondere aus der Rauchgasentschwefelung.**

(57) Die Erfindung betrifft ein Verfahren zur Aufbereitung von Abwasser, insbesondere aus der Rauchgasentschwefelung, bei dem das Abwasser neutralisiert (2) und von Feststoffen befreit (7) wird und anschließend im Abwasser enthaltene Schwermetalle ausgefällt werden (22), wobei die Schlämme aus Feststoffen und Schwermetallen entwässert (17,36) und das Filtrat im Kreislauf zurückgeführt wird, während das aufbereitete Abwasser konditioniert und gekühlt wird. Damit Schwermetalle gesondert und in möglichst reiner Form anfallen, soll das Abwasser durch Flotation (7) von Feststoffen befreit und neutralisiert werden.

EP 0 355 667 A1

## Verfahren und Anlage zur Aufbereitung von Abwasser, insbesondere aus der Rauchgasentschwefelung

Die Erfindung betrifft ein Verfahren zur Aufbereitung von Abwasser, insbesondere aus der Rauchgasentschwefelung, bei dem das Abwasser neutralisiert und von Feststoffen befreit wird und anschließend im Abwasser enthaltene Schwermetalle ausgefällt werden, wobei die Schlämme aus Feststoffen und Schwermetallen entwässert und das Filtrat im Kreislauf rückgeführt wird, während das aufbereitete Abwasser konditioniert und gekühlt wird. - Die Erfindung betrifft auch eine Anlage zur Durchführung des Verfahrens.

Herkömmlich wird das von der Rauchgasentschwefelung kommende Abwasser in einem Behälter, der mit einer Ringleitung ausgestattet ist, aufgenommen. Zum SO$_3$-Entzug wird über die Ringleitung Luft eingeblasen, die von einem Kompressor geliefert wird. Danach gelangt das Abwasser in eine Neutralisationsstation, in der Kalkmilch zugemischt wird. Diese Kalkmilch wird in einer vorgeschalteten Anlage hergestellt und muß in einer Ringleitung, die zu allen Verbrauchsstellen führt, ständig in Fluß gehalten werden. Aus der Ringleitung werden die einzelnen Verbrauchsstellen mit Kalkmilch versorgt. In einem weiteren Behälter der Neutralisationsstation wird dem Abwasser ein Flokkungsmittel z.B. FeCl$_3$, zugemischt sowie auf dem weiteren Wege zu einem Eindicker ein Flockungs-Hilfsmittel z.B. Polyelektrolyth. Im Eindicker sedimentieren die Feststoffe und werden zum Teil zur besseren Flockenbildung zur Neutralisationsstation zurückgepumpt.

Der sedimentierte Schlamm gelangt in einen Schlamm-Stapelbehälter, aus dem er in eine Vorlage einer Kammer-Filterpresse gefördert wird. Zur Verbesserung der Entwässerung muß in der Vorlage Kalkmilch zugegeben werden. Die Beschickung der Filterpresse erfolgt chargenweise, und dementsprechend fallen die entwässerten Feststoffe und das Filtrat ebenfalls chargenweise an. Deswegen erfordert der Abtransport der entwässerten Feststoffe (Filtergruben) aufwendige Transportaggregate, z.B. Trogkettenförderer. Das Filtrat wird zum Aufgabebehälter zurückgeführt.

Das vom Eindicker kommende und von Feststoffen befreite Abwasser gelangt in eine Schwermetall-Fällanlage, in der zunächst sein pH-Wert durch entsprechende Zugaben von z.B. NaOH auf den für das jeweilige Fällmittel erforderlichen Wert angehoben werden muß. In einem weiteren Behälter der Fällanlage wird dann ein Fällmittel zugegeben. Das anfallende Schwermetall wird sodann in einem weiteren Behälter durch Zugabe von Flokkungsmitteln, z.B. FeCl$_3$, ausgeflockt. Aus den dabei entstehenden Miniflocken werden durch Zugabe eines Flockungs-Hilfsmittels, z.B. Polyelektrolyth, Maxiflocken gebildet, die sich in einem nachgeschalteten Klärwerk, z.B. einem Lamellenklärwerk, absetzen. Der eingedickte Schwermetallschlamm gelangt zunächst in eine Vorlage und wird dann gemeinsam mit dem übrigen Feststoffschlamm in der Kammer-Filterpresse entwässert.

Dem aufbereiteten Abwasser wird in einem Konditionierer eine Säure, z.B. HCl zugegeben und damit der pH-Wert in den neutralen Bereich gesenkt, bevor das Abwasser über Kühltürme abgeführt wird.

Das alles erfordert nicht nur einen verhältnismäßig großen anlagetechnischen Aufwand, sondern hat auch den Nachteil, daß ein Gemisch aus Feststoffen und Schwermetallen anfällt, dessen Beseitigung oder sinnvolle Verwendung Probleme bereitet. Selbst wenn man daran denken würde, den Feststoffschlamm einerseits und den Schwermetallschlamm andererseits gesondert zu entwässern, wäre eine gesonderte Weiterverarbeitung des entwässerten Schwermetallschlamms nicht ohne weiteres möglich, weil das Abwasser bei der Sedimentation im Eindicker nicht vollständig von Feststoffen befreit wird, so daß insbesondere feinere Feststoffanteile erst zusammen mit den Schwermetallen in der Schwermetall-Fällanlage ausgefällt werden.

Aufgabe der Erfindung ist es daher, das eingangs genannte Verfahren so zu verbessern, daß Schwermetalle gesondert und in möglichst reiner Form anfallen.

Diese Aufgabe wird dadurch gelöst, daß das Abwasser durch Flotation von Feststoffen befreit und neutralisiert wird. Durch Flotation werden die vom Abwasser mitgeführten Feststoffe wesentlich vollständiger ausgetragen als durch Sedimentation. Während man bei Sedimentation immer einen trüben Ablauf erhält, ergibt sich bei Flotation ein klarer Ablauf. Deswegen fallen die anschließend ausgeschiedenen Schwermetalle in verhältnismäßig reiner Form an, und die vorher ausgeschiedenen Feststoffe sind nicht mit Schwermetallen belastet. Der klare Ablauf der Flotation hat außerdem den Vorteil, daß eine Reinigung des Abwassers von Kohlenwasserstoffen und auch eine Herabsetzung des chemischen Sauerstoffbedarfs (CSB-Wert) möglich ist. Durch gleichzeitiges Neutralisieren des Abwassers in der Flotation kann auch der anlagetechnische Aufwand verringert werden.

Insbesondere soll das mit Flockungsmitteln versehene Abwasser in eine Flotationsmaschine geleitet werden, in der dem Abwasser Luft und ein Schäumer beigegeben werden. Der sich dann bildende, die Feststoffe enthaltene Schaum wird abgeskimmt und einer Feststoff-Entwässerung zugeführt, während das von den Feststoffen befreite Abwasser einer Schwermetall-Fälleinrichtung zugeführt wird. Das Aufschwimmen der Feststoffe in der Flotationsmaschine kann durch Rührwerke unterstützt werden, die gleichzeitig dazu eingerichtet sind, Luft und/oder Schäumer in das Abwasser einzubringen.

Eine Anlage zur Durchführung des Verfahrens mit einer Einrichtung zum Neutralisieren des Abwassers, einer Einrichtung zum Abtrennen der Feststoffe, einer Schwermetall-Fälleinrichtung, Einrichtungen zur Entwässerung von Schlämmen der Feststoffe und Schwermetalle sowie einer Einrichtung zum Konditionieren des aufbereiteten Abwassers ist gekennzeichnet durch eine Flotationsmaschine zum Neutralisieren und Abtrennen der Feststoffe. Die Flotationsmaschine kann Rührwerke mit Einrichtungen zum Einbringen von Luft und/oder Schäumern in das Abwasser aufweisen. Für die Entwässerung der Schlämme aus Feststoffen und/oder Schwermetallen werden vorzugsweise Dekanter eingesetzt.

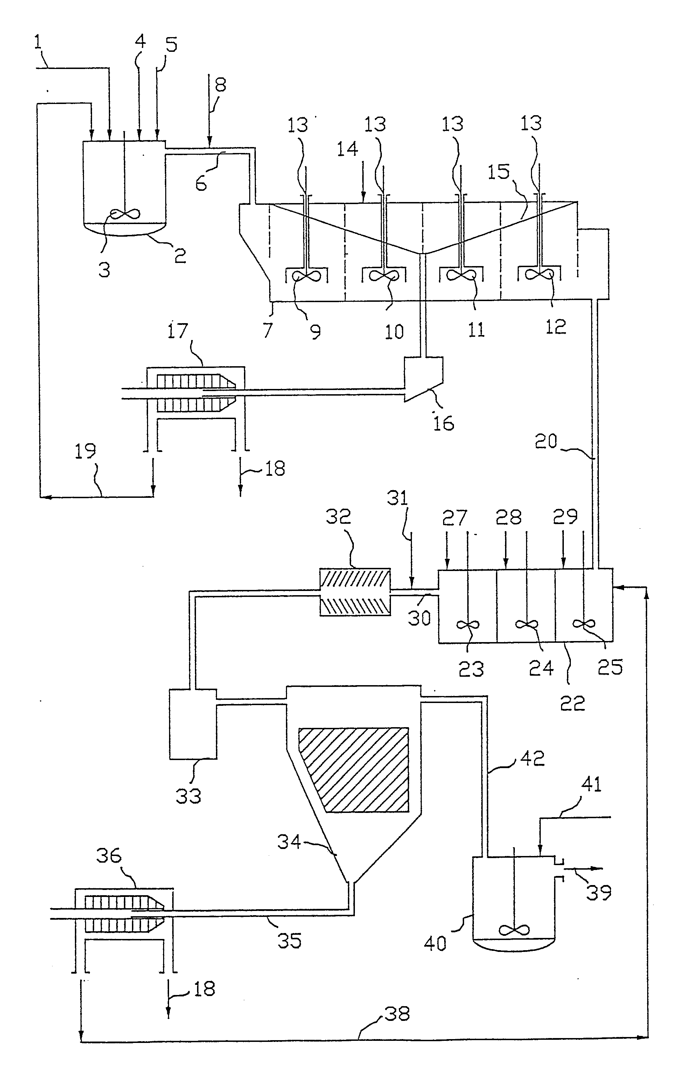

Im folgenden wird ein in der Zeichnung darge-stelltes Ausführungsbeispiel der Erfindung erläu-tert; die einzige Figur zeigt in schematischer Darstellung eine Anlage zur Aufbereitung von Abwasser aus der Rauchgasentschwefelung.

Das von einer nicht dargestellten Rauchgasentschwefelungsanlage kommende Abwasser gelangt über eine Leitung 1 in einen Konditionierer 2 mit einem Rührwerk 3. Dem im Konditionierer 2 befindlichen Abwasser wird bei 4 ein Flockungsmittel, z.B. $FeCl_3$, und bei 5 kann Kalkmilch oder ein sonstiges Neutralisationsmittel zugegeben werden. An einen Überlauf des Konditionierers 2 schließt eine Leitung 6 an, die zu einer Flotationsmaschine 7 führt. In der abgeführten Leitung 6 wird das Abwasser bei 8 mit einem Flockungs-Hilfsmittel, z.B. Polyelektrolyth, geimpft, bevor es in die Flotationsmaschine 7 gelangt.

Die Flotationsmaschine 7 weist mehrere Rührwerke 9, 10, 11, 12 auf, wobei alle Rührwerke 9, 10, 11, 12 für den Eintrag von Luft in das Abwasser eingerichtet sind und dementsprechend einen Luftansaugstutzen 13 aufweisen. Im Bereich des Rührwerks 9 wird dem Wasser außerdem bei 14 ein Schäumer zugegeben.

Die dem Abwasser zugeführte Luft dient zur $SO_3$-Reduktion und zur Neutralisierung. Der Schäumer veranlaßt die ge flockten Feststoffe zum Aufschwimmen. Das Aufschwimmen der Feststoffe wird durch die Rührwerke 9 bis 12 und die von diesen eingebrachte Luft unterstützt, so daß sich auf der Oberfläche des Flotationsbades eine Schaumschicht bildet. Die in die Schaumschicht eingebundenen Feststoffe werden durch seitlich am Flotationstrag angeordnete, nicht dargestellte Paddelwerke abgeskimmt und in Schaumfangrinnen 15 befördert, aus denen der Schaum über eine Vorlage 16 zu einem Dekanter 17 zur Feststoff-Entwässerung fließt. Der aus dem Dekanter 17 bei 18 ausgetragene Feststoff kann einer weiteren Verwendung zugeführt und beispielsweise mit ungelöschtem Feinkalk gemischt werden. Das im Dekanter 17 angefallene Filtrat wird über eine Leitung 19 in den Konditionierer 2 zurückgeführt.

Der aus der Flotationsmaschine 7 ausgetretene klare Ablauf gelangt über eine Leitung 20 in eine Schwermetall-Fälleinrichtung 21. Dazu gehört zunächst ein Behälter 22 mit drei hintereinander geschalteten und miteinander verbundenen Kammern 23, 24, 25, in denen jeweils ein Rührwerk 26 angeordnet ist. In der ersten Kammer 23 wird dem Abwasser bei 27 NaOH zugegeben, in der zweiten Kammer 24 bei 28 ein Fällungsmittel und in der dritten Kammer 25 bei 29 ein Flockungsmittel. Die in der zweiten Kammer 24 ausgefällten Schwermetalle werden in der dritten Kammer 25 vorgeflockt und gelangen mit dem Abwasser über eine Leitung 30, in der sie bei 31 mit einem Flockungsmittel geimpft werden und in einen Mischer 32 gelangen. Im Mischer 32 werden die Flockungshilfsmittel intensiv in das Abwasser eingemischt.

Die Bildung fester Maxiflocken erfolgt in einer dem Mischer 32 nachgeschalteten Reaktionskammer 33, aus der die so gebildete Trübe in einen Lamellenklärer 34 gelangt. Im Lamellenklärer 34 werden die Flocken als Schwermetallschlamm ausgeschieden, der über eine Leitung 35 zur Ent wässerung und einem Dekanter 36 zugeführt wird. Am Austrag 37 des Dekanters fällt reines Schwermetall an. Das Filtrat des Dekanters wird über die Leitung 38 in die erste Kammer 23 des Behälters 22 zurückgeführt.

Das im Lamellenklärer 34 von den Flocken befreite, klare Abwasser gelangt über eine Leitung 42 in einen Konditionierer 40, wo es durch Zugabe von HCl bei 41 neutralisiert wird, bevor es über eine Leitung 39 einem Kühlturm oder einem Kon-trollbecken zugeleitet wird.

## Ansprüche

1. Verfahren zur Aufbereitung von Abwasser, insbesondere aus der Rauchgasentschwefelung, bei dem das Abwasser neutralisiert und von Feststoffen befreit wird und anschließend im Abwasser enthaltene Schwermetalle ausgefällt werden, wobei die Schlämme aus Feststoffen und Schwermetallen entwässert und das Filtrat im Kreislauf rückgeführt wird, während das aufbereitete Abwasser konditioniert und gekühlt wird, dadurch gekennzeichnet, daß das Abwasser durch Flotation von Feststoffen befreit und neutralisiert wird.

2. Verfahren nach Anspruch 1, dadurch gekennzeichnet, daß das mit Flockungsmitteln versehene Abwasser in eine Flotationsmaschine geleitet wird, in der dem Abwasser Luft und ein Schäumer beigegeben werden, daß der sich bildende, die Feststoffe enthaltene Schaum abgeskimmt und einer Feststoff-Entwässerung zugeführt wird, und daß das von Feststoffen befreite Abwasser einer Schwermetall-Fälleinrichtung zugeführt wird.

3. Verfahren nach Anspruch 1 oder 2, dadurch gekennzeichnet, daß Luft und Schäumer über Rührwerke in das Abwasser eingebracht werden.

4. Anlage zur Durchführung des Verfahrens nach einem der Ansprüche 1 bis 3, mit einer Einrichtung zum Neutralisieren des Abwassers, einer Einrichtung zum Abtrennen der Feststoffe, einer Schwermetall-Fälleinrichtung, Einrichtungen zur Entwässerung von Schlämmen der Feststoffe und Schwermetalle sowie einer Einrichtung zum Konditionieren des aufbereiteten Abwassers, gekennzeichnet durch eine Flotationsmaschine (7) zum Neutralisieren und Abtrennen der Feststoffe.

5. Anlage nach Anspruch 4, dadurch gekennzeichnet, daß die Flotationsmaschine (7) Rührwerke (9, 10, 11, 12) mit Einrichtungen zum Einbringen von Luft (13) und/oder Schäumern (14) in das Abwasser aufweist.

6. Anlage nach Anspruch 4 oder 5, dadurch gekennzeichnet, daß die Einrichtungen zur Entwässerung als Dekanter (17, 36) ausgebildet sind.

Essen, den 11.8.1989
PZ 3447    EB/bk


B E Z U G S Z E I C H E N L I S T E


 1 Leitung                          22 Behälter

 2 Konditionierer                   23 Kammer

 3 Rührwerk                         24 Kammer

 4 Flockungsmittel                  25 Kammer

 5 Kalkmilchzugabe                  26 Rührwerk

 6 Leitung                          27 NaOH-Zugabe

 7 Flotationsmaschine               28 Fällungsmittel-Zugabe

 8 Flockungshilfsmittel             29 Flockungsmittel-Zugabe

 9 Rührwerk                         30 Leitung

10 Rührwerk                         31 Flockungshilfsmittel-Zugabe

11 Rührwerk                         32 Mischer

12 Rührwerk                         33 Reaktionskammer

13 Luftansaugstutzen                34 Lamellenklärer

14 Schäumerzugabe                   35 Leitung

15 Schaumfangrinnen                 36 Dekanter

16 Vorlage                          37 Austrag

17 Dekanter                         38 Leitung

18 Austrag                          39 Leitung

19 Leitung                          40 Konditionierer

20 Leitung                          41 HCl-Zugabe

21 Schwermetall-Fälleinrichtung     42 Leitung

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | VGB KRAFTWERKSTECHNIK, Band 68, Nr. 5, Mai 1988, Seiten 528-536, Essen, DE; K. HEYN: "Erfahrungen mit der Abwasseraufbereitung hinter Rauchgasentschwefelungsanlagen" * Seite 533, Figur 9; Seite 534, linke Spalte, Absatz 7 - rechte Spalte, Absatz 2 * --- | 1,6 | C 02 F 1/52 C 02 F 1/62 C 02 F 1/24 |
| Y | CHEMICAL ABSTRACTS, Band 90, Nr. 4, 22. Januar 1979, Seite 327, Zusammenfassung Nr. 28678j, Columbus, Ohio, US; & JP-A-78 110 963 (KYORITSU YUKI CO., LTD) 28-09-1978 * Zusammenfassung * --- | 1,6 | |
| A | DE-A-1 658 124 (SIEBTECHNIK) * Seite 3, Ansprüche 1,3,4 * --- | 1,2,6 | |
| A | EP-A-0 080 589 (THYSSEN INDUSTRIE) * Seite 8, Zeilen 18-28; Seite 9, Zeile 20 - Seite 10, Zeile 9 * --- | 2-6 | |
| A | CHEMICAL ABSTRACTS, Band 92, Nr. 8, 25. Januar 1980, Seite 345, Zusammenfassung Nr. 64147k, Columbus, Ohio, US; Y. KAIDA et al.: "Treatment of waste water from refuse incineration plant. III. Removal of trace toxic heavy metals by flotation using primary long-chain alkylamine", & MIZU SHORI GIJUTSU 1979, 20(7), 623-9 ----- | 1,2 | RECHERCHIERTE SACHGEBIETE (Int. Cl.5) C 02 F |

Der vorliegende Recherchenbericht wurde für alle Patentansprüche erstellt

| Recherchenort | Abschlußdatum der Recherche | Prüfer |
|---|---|---|
| DEN HAAG | 07-11-1989 | TEPLY J. |